# FASCICULE DE BREVET EUROPEEN

(11) **EP 3 838 519 B1**
(45) Date de publication et mention de la délivrance du brevet: **22.06.2022**
(21) Numéro de dépôt: 20214615.5
(22) Date de dépôt: 16.12.2020
(51) Int. Cl.: B25J 21/00, B25J 21/02

(54) **ISOLATEUR**
ISOLATOR
INSULATOR

(30) Priorité: 17.12.2019 FR 1914640
(43) Date de publication de la demande: 23.06.2021
(73) Titulaire: JCE Biotechnology, 03270 Hauterive (FR)
(72) Inventeur: GOHIER, Eric, 03200 Vichy (FR)
(74) Mandataire: Lavoix

(56) Documents cités:
- EP-A1- 2 363 255
- FR-A1- 2 842 739
- US-A1- 2017 292 101
- US-B1- 9 180 597

## Description

La présente invention concerne un isolateur.

Les isolateurs sont des enceintes délimitant un milieu intérieur dont l'atmosphère est contrôlée, qui sont largement utilisées par exemple les domaines de la biologie ou de la santé, soit pour manipuler des produits stériles sans risque de contamination provenant du milieu extérieur, soit pour manipuler des produits pathogènes sans risque de contaminer le milieu extérieur. Les isolateurs comprennent généralement une surface de travail coiffée d'une enceinte transparente, dans laquelle sont ménagées des paires de trous obturés par des gants de manipulation. Les isolateurs sont ainsi parfois appelés « boites à gants ». Chaque paire de gants définit un poste de travail, c'est-à-dire un emplacement autour de l'isolateur dans lequel un opérateur se tient pour manipuler des objets situés à l'intérieur de l'enceinte, pour par exemple préparer des médicaments ou faire des essais sur des échantillons biologiques. D'autres accessoires et trappes de passage peuvent être prévus, notamment pour transférer des objets entre les milieux intérieur et extérieur tout en préservant la séparation des milieux.

Un isolateur comprenant ainsi de nombreux équipements tels que des équipements de pressurisation, de filtration, de décontamination, etc., qui sont coûteux ; aussi un isolateur associe généralement plusieurs postes de travail. Un isolateur ne comportant qu'un seul poste de travail est dit isolateur « mono-poste », tandis qu'un isolateur comportant deux postes de travail est dit isolateur « double-poste », les deux postes d'un isolateur double-poste étant généralement disposés en regard l'un de l'autre.

L'opérateur qui se tient à un poste de travail est dans une situation statique, et les tâches qu'il effectue sont souvent répétitives, ce qui entraine des risques élevés d'apparition de troubles musculo-squelettiques, dits aussi « TMS ». Pour réduire ces risques, chaque poste de travail est agencé de façon ergonomique.

D'autre part, lorsque l'opérateur doit suivre un protocole de préparation spécifique et contrôlé, par exemple dans le cas de la préparation de médicaments, l'opérateur doit garder à proximité les informations nécessaires auxquelles il doit se référer fréquemment. Traditionnellement, le protocole de préparation est imprimé sur un document tel qu'une feuille de papier, et l'opérateur doit, à chaque nouvelle préparation, introduire le document dans l'isolateur, ce qui est une source potentielle de contamination entre les milieux intérieur et extérieur et une perte de temps. La feuille de papier est ensuite posée sur la surface de travail, sans pouvoir l'accrocher à hauteur des yeux à cause de l'amplitude de mouvement limitée par les gants, ce qui est peu ergonomique, car l'opérateur doit effectuer de nombreuses torsions du cou pour vérifier les informations à chaque étape du protocole de préparation.

Il est connu, dans le cas d'un isolateur mono-poste, de disposer un écran de visualisation de l'autre côté de l'enceinte par rapport au poste de travail de l'opérateur, de manière que l'opérateur visualise les informations de l'écran sans avoir à tordre son cou de manière répétitive.

Une telle solution n'est cependant pas compatible avec la structure des isolateurs double-poste, dans laquelle les postes de travail sont situés en regard l'un de l'autre.

FR-2 842 739-A1 décrit un isolateur avec une paroi latérale équipée d'un sas d'entrée / sortie, le sas comprenant des compartiments de désinfection. L'isolateur comprenant aussi un écran d'affichage situé à l'intérieur de l'isolateur.

C'est à ces problèmes qu'entend plus particulièrement remédier l'invention, en proposant un isolateur double-poste à l'ergonomie améliorée.

À cet effet, l'invention concerne un isolateur, qui comprend une enceinte délimitant un volume intérieur avec une atmosphère contrôlée. L'isolateur présente deux parois frontales situées en regard l'un de l'autre et reliées l'une à l'autre par deux parois latérales. Un poste de travail est ménagé dans chacune des parois frontales, chaque poste de travail comprenant une zone d'observation transparente et deux trous reliés de façon étanche à des gants de manipulation, chaque poste de travail étant configuré pour permettre à un opérateur, situé hors de l'enceinte, de voir l'intérieur de l'enceinte au travers de la zone d'observation tout en manipulant, à l'aide des gants de manipulation, des objets situés dans le volume intérieur. Selon l'invention, une des parois latérales présente un renfoncement, ménagé en saillie par rapport au reste de cette paroi latérale du côté du volume intérieur. Le renfoncement ménage deux surfaces de visualisation, qui sont respectivement orientées vers les zones d'observation de manière à être visibles par les opérateurs.

Grâce à l'invention, chacun des opérateurs de l'isolateur double-poste dispose des informations dont il a besoin dans son champ visuel, ce qui évite à l'opérateur d'avoir à tourner la tête suivant une amplitude trop importante et réduit les risques de TMS. Avantageusement, des supports visuels d'informations, tels que des écrans d'ordinateur commandés par un ordinateur, sont placés dans le renfoncement au niveau des surfaces de visualisation. De cette façon, les informations affichées sur le support visuel d'informations sont toujours adaptées à la tâche de l'opérateur, qui n'a plus besoin d'introduire dans l'isolateur un nouveau document à chaque nouvelle tâche, ce qui réduit les risques de contamination et est un gain de temps.

Selon des aspects avantageux mais non obligatoires de l'invention, un tel isolateur peut incorporer une ou plusieurs des caractéristiques suivantes prises selon toute combinaison techniquement admissible :
- l'isolateur comprend des supports visuels d'informations, qui sont respectivement situés au niveau des surfaces de visualisation et qui sont chacun visibles par l'opérateur lorsqu'il regarde la surface de visualisation correspondante au travers de la zone d'observation correspondante ;
- les supports visuels d'informations sont commandés par un ordinateur ;
- un axe reliant l'une à l'autre les deux zones d'observation et un axe d'observation reliant une des zone d'observation au support visuel d'informations correspondant définissent entre eux un décalage angulaire, qui est inférieur à 45°, de préférence inférieur à 35° ;
- pour chaque support visuel d'informations, un axe orthogonal au support visuel d'informations définit, avec l'axe d'observation passant par le support visuel d'informations, un angle d'alignement qui est inférieur à 30°, de préférence inférieur à 20°, de préférence encore inférieur à 5° ;
- chacune des surfaces de visualisation (22) est plane ;
- chacune des surfaces de visualisation est située dans un plan vertical ;
- au moins un des supports visuels d'informations est un écran d'ordinateur, qui est maintenu en regard de la surface de visualisation correspondante, prévue transparente, par un dispositif de maintien à l'extérieur de l'enceinte ;
- moins un des supports visuels d'informations comprend un écran de projection, situé au niveau de la surface de visualisation correspondante, et
- le renfoncement est prévu sur chacune des deux parois latérales.

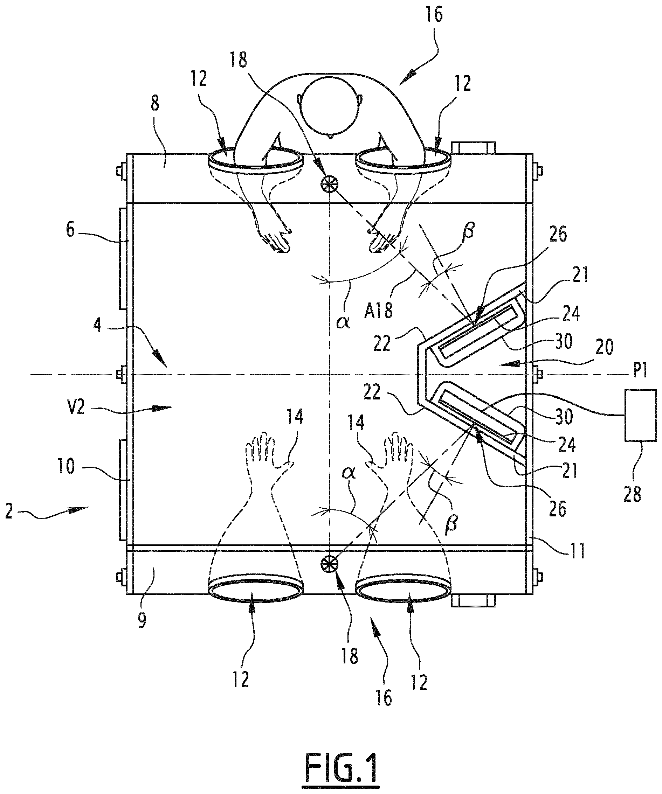

L'invention sera mieux comprise et d'autres avantages de celle-ci apparaîtront plus clairement à la lumière de la description qui va suivre, d'un mode de réalisation d'un isolateur conforme à son principe, donné uniquement à titre d'exemple et faite en référence à [Fig 1] la figure 1, qui est une vue schématique de dessus d'un isolateur conforme à l'invention.

Un isolateur 2 est représenté sur la figure 1. L'isolateur 2 présente ici une forme symétrique par rapport à un plan vertical transversal P1.

L'isolateur 2 comprend une surface de travail 4, qui est typiquement horizontale et représentée ici dans le plan de la figure 1, ainsi qu'une enceinte 6, qui recouvre la surface de travail 4 et définit un volume intérieur V2 de l'isolateur 2. La surface de travail 4 ferme le volume intérieur V2 vers le bas.

Le volume intérieur V2 est clos, c'est-à-dire que l'enceinte 6 sépare un milieu intérieur, associé au volume intérieur V2, d'un milieu extérieur à l'isolateur 2. Le volume intérieur V2 est donc coupé du milieu extérieur, c'est-à-dire que l'air, les poussières ou les agents pathogènes ne peuvent circuler librement entre le volume intérieur V2 et l'extérieur de l'isolateur 2. L'isolateur 2 comprend à cet effet divers équipements de contrôle de l'atmosphère du volume intérieur V2, tel que des équipements de ventilation, de filtration et/ou de décontamination de l'air, etc., ces exemples n'étant pas limitatifs. Les divers équipements de contrôle de l'atmosphère du volume intérieur V2 ne sont pas représentés.

Dans l'exemple illustré, l'enceinte 6 présente une forme sensiblement parallélépipédique et comprend deux parois frontales 8 et 9, situées en regard l'une de l'autre et reliées l'une à l'autre par deux parois latérales 10 et 11. Sur la figure 1, les parois frontales 8 et 9 sont disposées symétriquement de part et d'autre du plan transversal P1, tandis que les parois latérales 10 et 11 sont chacune orthogonales au plan transversal P1.

Les parois frontales 8 et 9 et les parois latérales 10 et 11 sont avantageusement réalisées en un matériau transparent, par exemple en verre ou en polycarbonate, et sont formées de panneaux assemblés les uns aux autres sur une armature, non représentée, constituée par exemple de profilés métalliques vissés les uns aux autres.

Chacune des parois frontales 8 et 9 comprend une paire de trous 12, chaque paire de trous 12 étant respectivement reliée à une paire de gants de manipulation 14. Les gants 14 sont représentés en pointillés sur la figure 1. Plus précisément, chaque trou 12 est relié de façon étanche à une manchette du gant 14 correspondant, les gants 14 étant disposés au sein du volume intérieur V2 de manière qu'un opérateur puisse, à l'aide des gants 14, manipuler divers objets posés sur la surface de travail 4 dans le volume intérieur V2. Un tel opérateur est représenté de façon schématique dans la partie haute de la figure 1, cet opérateur passant les bras par les trous 12 ménagés dans la parois frontale 8 et glissant ses mains dans les gants 14 correspondants pour ainsi manipuler des objets, non représentés, situés dans le volume intérieur V2.

Chacune des paires de trous 12 définit ainsi un poste de travail 16. L'isolateur 2 comprend donc deux postes de travail 16 situés en regard l'un de l'autre de part et d'autre du plan transversal P1. Autrement dit, l'isolateur 2 est un isolateur double-poste. On comprend qu'un opérateur situé à l'un des postes de travail 16 peut regarder à l'intérieur de l'isolateur 2 au travers de la paroi frontale 8 ou 9 devant laquelle il se trouve.

Pour chacune des parois frontales 8 ou 9, on définit une zone d'observation 18 comme étant une portion centrale de la paroi frontale 8 ou 9 correspondante, alignée avec le regard de l'opérateur lorsque ce dernier se tient au poste de travail 16 correspondant et regarde à l'intérieur du volume V2. La zone d'observation 18 est ainsi prévue transparente.

Au moins l'une des parois latérales 10 ou 11 présente un renfoncement 20 qui se déploie au sein du volume intérieur V2. Sur la figure 1, le renfoncement 20 est prévu sur la paroi latérale 11, en étant ménagé en saillie par rapport au reste de la paroi latérale 11, du côté du volume intérieur V2. Le renfoncement 20 présente ici une section horizontale ayant la forme d'un trapèze isocèle, qui est disposé symétriquement de part et d'autre du plan transversal P1. Le trapèze comprend une base, un sommet parallèle à la base et deux côtés obliques 21. La base du trapèze est coplanaire des parties de la paroi 11, situées de part et d'autre du renfoncement 20, tandis que le sommet du trapèze, qui est plus petit que la base, est situé du côté du volume intérieur V2. Les deux côtés obliques 21 du trapèze définissent deux surfaces de visualisation 22 du renfoncement 20, chacune des surfaces de visualisation 22 étant orientée respectivement vers une des zones d'observation 18.

On comprend qu'un opérateur, situé à l'un des postes de travail 16, peut aisément regarder la surface de visualisation 22 associée, orientée vers lui, en ne tournant que très légèrement la tête. Les surfaces de visualisation 22 sont ainsi situées dans le champ de vision de l'opérateur, qui se tient à l'un des postes de travail 16 face à la paroi frontale 8 ou 9 correspondante.

Avantageusement, chacune des surfaces de visualisation 22 est plane, de manière à, notamment, éviter les reflets parasites, sources de fatigue visuelle de l'opérateur.

Avantageusement, les surfaces de visualisation 22 sont chacune situées dans un plan vertical, de manière à être adaptées à la morphologie du plus grand nombre d'opérateurs.

L'isolateur 2 comprend, en outre, deux supports visuels d'informations 24, qui sont chacun situés au niveau d'une surface de visualisation 22 respective. Les supports visuels d'informations 24 sont conçus pour représenter des données sur une surface préférentiellement plane, par exemple sous forme de texte, d'image ou de graphique.

Dans l'exemple illustré, les supports visuels 24 sont situés dans le creux du renfoncement 20, à l'extérieur du volume intérieur V2, et sont chacun plaqués contre une surface de visualisation 22 respective.

Sur la figure 1, un intervalle est représenté entre les supports visuels d'information 24 et les surfaces de visualisation 22 pour faciliter la lecture. Cependant on peut considérer que chaque support visuel d'information 24 est géométriquement confondu avec la surface de visualisation 22 en regard.

Les supports visuels 24 sont ainsi visibles par l'opérateur lorsqu'il regarde la surface de visualisation 22 correspondante au travers de la zone d'observation 18 associée.

Chacun des supports visuels d'information 24 présente un centre 26. On définit un axe d'observation A18 comme étant un axe reliant chacune des zones d'observation 18 au centre 26 du support visuel d'informations 24 orienté vers cette zone d'observation 18.

On définit un décalage angulaire α comme étant un angle entre, d'une part, un axe reliant l'une à l'autre les deux zones d'observation 18 de l'isolateur 2 et, d'autre part, l'axe d'observation A18.

Le décalage angulaire α représente donc l'angle selon lequel un opérateur doit tourner sa tête pour, lorsqu'il se tient à l'un des postes de travail 16 avec le corps face à l'une des parois frontales 8 ou 9 correspondante, regarder de face le support visuel d'informations 24 correspondant. On comprend que plus le décalage angulaire α est réduit, et meilleure est l'ergonomie d'un poste de travail 16.

En pratique, le décalage angulaire α est inférieur à 45°, de préférence inférieur à 35°.

On définit un angle d'alignement β comme étant, pour chacun des supports visuels d'informations 24, l'angle entre un axe orthogonal au support visuel d'informations 24 et l'axe d'observation A18 passant par le centre 26 du même support visuel 24.

On comprend que plus l'angle d'alignement β est proche de 0° et plus le support visuel 24 est orienté vers l'opérateur lorsque l'opérateur tourne la tête pour regarder le support visuel 24, ce qui est plus confortable pour l'opérateur. En pratique, l'angle d'alignement β est inférieur à 30°, de préférence inférieur à 20°, de préférence encore inférieur à 5°.

Les supports visuels 24 sont avantageusement commandés par un ordinateur 28. Les données représentées par les supports visuels 24 peuvent ainsi être changées de façon dynamique, par exemple en fonction des tâches effectuées par l'opérateur, ce qui est une source de gain de temps. Des animations peuvent aussi être représentées sur les supports visuels 24.

Dans l'exemple illustré, les supports visuels d'informations 24 sont des écrans plats d'ordinateur, tandis que les surfaces de visualisation 22 sont transparentes.

Un seul ordinateur 28 est représenté sur la figure 1. Bien entendu plusieurs ordinateurs 28 peuvent être prévus pour commander les supports visuels 24, notamment un ordinateur 28 pour chaque support visuel 24.

L'isolateur 2 comprend, en outre, des dispositifs de maintien 30, qui sont prévus pour maintenir chaque support visuel d'informations 24 en regard d'une surface de visualisation 22 associée.

Dans l'exemple illustré, les supports visuels d'informations 24 sont chacun maintenus en position, à l'extérieur de l'enceinte 6 en regard d'une surface de visualisation 22 respective, par un dispositif de maintien 30.

Les dispositifs de maintien 30 présentent ici une forme de cage, chaque dispositif de maintien 30 étant monté sur une surface de visualisation 22 respective et étant configuré pour maintenir de façon réversible les supports visuels 24, de manière à faciliter, le cas échéant, le remplacement d'un support visuel 24 défectueux.

Bien entendu d'autres modes de réalisation des dispositifs de maintien 30 sont possibles, tant que les dispositifs de maintien 30 permettent de maintenir en position les supports visuels d'informations 24 au niveau d'une surface de visualisation 22 respective. À titre d'exemples non limitatifs, les dispositifs de maintien 30 peuvent être des bras articulés fixés sur l'isolateur 2, ou bien les dispositifs de maintien 30 peuvent être distincts de l'isolateur 2, et être posés sur le sol au voisinage de l'isolateur 2.

Dans l'exemple illustré, le renfoncement 20 présente une forme de trapèze. Bien entendu d'autres formes sont possibles, tant que le renfoncement 20 présente les deux surfaces de visualisation 22 orientées vers les zones d'observation 18 ainsi que décrit précédemment.

En variante non représentée, un renfoncement similaire au renfoncement 20 est ménagé dans chacune des parois latérales 10 et 11.

L'isolateur 2 représenté est double-poste ; en variante non représentée, deux isolateurs doubles-postes peuvent être combinés, avec deux postes de travail voisins ménagés dans chacune des parois frontales 8 et 9. Dans ce cas, chacune des parois latérales 10 et 11 comprend un renfoncement 20 respectif, qui est ménagé en saillie par rapport au reste de la paroi latérale 10 ou 11 correspondante du côté du volume intérieur V2. Chaque renfoncement 20 ménage deux surfaces de visualisations 22, orientées chacune vers l'un des deux postes de travail 16 les plus proches, situés chacun sur l'une des parois frontales 8 ou 9 correspondante.

Selon une variante non représentée, les supports visuels d'information 24 sont des documents imprimés, tels que des feuilles de papier, qui sont fixés sur la surface de visualisation 22, dans le renfoncement 20 à l'extérieur du volume interne V2. Les surfaces de visualisation 22 sont alors présumées transparentes.

Selon une autre variante non représentée, les supports visuels d'informations 24 comprennent des écrans de projection, qui sont chacun associés à un projecteur respectif, commandé par un ordinateur du type de l'ordinateur 28. Selon les cas, le projecteur peut être situé du même côté de l'écran de projection associé que l'opérateur, auquel cas l'écran de projection est opaque, ou bien le projecteur est situé du côté opposé de l'écran associé par rapport à l'opérateur, auquel cas l'écran de projection est semi-transparent. Selon d'autres variantes encore, les écrans de projection sont intégrés aux surfaces de visualisation 22.

Dans tous les cas, que les supports visuels d'informations 24 comprennent des écrans d'ordinateurs ou des écrans de projection, les supports visuels 24 sont associés à un ordinateur 28 qui les commande de manière à présenter à l'opérateur des informations dont il a besoin au cours des manipulations réalisées dans l'isolateur 2.

L'opérateur a ainsi accès aux informations nécessaires et ce, de façon ergonomique, les mouvements de cou étant réduits au minimum grâce à la disposition des supports visuels d'informations 24 dans le renfoncement 20 de la paroi latérale 11.

Le mode de réalisation et les variantes mentionnées ci-dessus peuvent être combinés entre eux pour générer de nouveaux modes de réalisation de l'invention, pour autant que l'objet résultant d'une telle combinaison ne dépasse pas le cadre défini par les revendications ci-jointes.

## Revendications

1. Isolateur (2), comprenant une enceinte (6) qui délimite un volume intérieur (V2) avec une atmosphère contrôlée, l'isolateur présentant deux parois frontales (8, 9) situées en regard l'un de l'autre et reliées l'une à l'autre par deux parois latérales (10, 11), un poste de travail (16) étant ménagé dans chacune des parois frontales, chaque poste de travail comprenant une zone d'observation (18) transparente et deux trous (12) reliés de façon étanche à des gants de manipulation (14), chaque poste de travail étant configuré pour permettre à un opérateur, situé hors de l'enceinte, de voir l'intérieur de l'enceinte au travers de la zone d'observation tout en manipulant, à l'aide des gants de manipulation, des objets situés dans le volume intérieur (V2),
**caractérisé en ce qu'**une des parois latérales (11) présente un renfoncement (20), ménagé en saillie par rapport au reste de cette paroi latérale (11) du côté du volume intérieur (V2), le renfoncement ménageant deux surfaces de visualisation (22), qui sont respectivement orientées vers les zones d'observation (18) de manière à être visibles par les opérateurs.

2. Isolateur (2) selon la revendication précédente, **caractérisé en ce que** l'isolateur comprend des supports visuels d'informations (24), qui sont respectivement situés au niveau des surfaces de visualisation (22) et qui sont chacun visibles par l'opérateur lorsqu'il regarde la surface de visualisation (22) correspondante au travers de la zone d'observation (18) correspondante.

3. Isolateur (2) selon la revendication précédente, **caractérisé en ce que** les supports visuels d'informations (24) sont commandés par un ordinateur (28).

4. Isolateur (2) selon l'une quelconque des revendications 2 ou 3, **caractérisé en ce qu'**un axe reliant l'une à l'autre les deux zones d'observation (18) et un axe d'observation (A18) reliant une des zone d'observation (18) au support visuel d'informations (24) correspondant définissent entre eux un décalage angulaire (a), le décalage angulaire étant inférieur à 45°, de préférence inférieur à 35°.

5. Isolateur (2) selon la revendication précédente, **caractérisé en ce que** pour chaque support visuel d'informations (24), un axe orthogonal au support visuel d'informations (24) définit, avec l'axe d'observation (A18) passant par le support visuel d'informations, un angle d'alignement (β) qui est inférieur à 30°, de préférence inférieur à 20°, de préférence encore inférieur à 5°.

6. Isolateur (2) selon l'une quelconque des revendications précédentes, **caractérisé en ce que** chacune des surfaces de visualisation (22) est plane.

7. Isolateur (2) selon la revendication précédente, **caractérisé en ce que** chacune des surfaces de visualisation (22) est située dans un plan vertical.

8. Isolateur (2) selon l'une quelconque des revendications 3 à 7, **caractérisé en ce qu'**au moins un des supports visuels d'informations (24) est un écran d'ordinateur, qui est maintenu en regard de la surface de visualisation (22) correspondante, prévue transparente, par un dispositif de maintien (30) à l'extérieur de l'enceinte (6).

9. Isolateur (2) selon l'une quelconque des revendications 3 à 7, **caractérisé en ce qu'**au moins un des supports visuels d'informations (24) comprend un écran de projection, situé au niveau de la surface de visualisation (22) correspondante.

10. Isolateur (2) selon l'une quelconque des revendications précédentes, **caractérisé en ce que** le renfoncement (20) est prévu sur chacune des deux parois latérales (10, 11).

## Patentansprüche

1. Isolator (2), umfassend ein Gehäuse (6), das ein Innenvolumen (V2) mit einer kontrollierten Atmosphäre begrenzt, wobei der Isolator zwei Stirnwände (8, 9) aufweist, die sich einander gegenüber befinden und durch zwei Seitenwände (10, 11) miteinander verbunden sind, wobei in jeder der Stirnwände ein Arbeitsplatz (16) eingerichtet ist, jeder Arbeitsplatz umfassend einen transparenten Beobachtungsbereich (18) und zwei Löcher (12), die dicht mit Manipulationshandschuhen (14) verbunden sind, wobei jeder Arbeitsplatz konfiguriert ist, um zu ermöglichen, das ein Bediener, der sich außerhalb des Gehäuses befindet, das Innere des Gehäuses durch den Beobachtungsbereich sehen kann, während er mittels der Manipulationshandschuhe Objekte manipuliert, die sich in dem Innenvolumen (V2) befinden,
**dadurch gekennzeichnet, dass** eine der Seitenwände (11) eine Vertiefung (20) aufweist, die in Bezug auf den Rest dieser Seitenwand (11) auf der Seite des Innenvolumens (V2) hervorstehend ausgebildet ist, wobei die Vertiefung zwei Sichtflächen (22) ausbildet, die jeweils zu den Beobachtungsbereichen (18) ausgerichtet sind, um von den Bedienern sichtbar zu sein.

2. Isolator (2) nach dem vorherigen Anspruch, **dadurch gekennzeichnet, dass** der Isolator visuelle Informationsträger (24) umfasst, die sich jeweils auf Ebene der Sichtflächen (22) befinden und die jeweils für den Bediener sichtbar sind, wenn er die entsprechende Sichtfläche (22) durch den entsprechenden Beobachtungsbereich (18) betrachtet.

3. Isolator (2) nach dem vorherigen Anspruch, **dadurch gekennzeichnet, dass** die visuellen Informationsträger (24) von einem Computer (28) gesteuert werden.

4. Isolator (2) nach einem der Ansprüche 2 oder 3, **dadurch gekennzeichnet, dass** eine Achse, die die zwei Beobachtungsbereiche (18) miteinander verbindet, und eine Beobachtungsachse (A18), die einen der Beobachtungsbereiche (18) mit dem entsprechenden visuellen Informationsträger (24) verbindet, untereinander einen Winkelversatz (α) definieren, wobei der Winkelversatz kleiner als 45°, vorzugsweise kleiner als 35°, ist.

5. Isolator (2) nach dem vorherigen Anspruch, **dadurch gekennzeichnet, dass** für jeden visuellen Informationsträger (24) eine zu dem visuellen Informationsträger (24) orthogonale Achse mit der durch den visuellen Informationsträger verlaufenden Beobachtungsachse (A18) einen Ausrichtungswinkel (β) definiert, der kleiner als 30°, vorzugsweise kleiner als 20°, besonders bevorzugt kleiner als 5°, ist.

6. Isolator (2) nach einem der vorherigen Ansprüche, **dadurch gekennzeichnet, dass** jede der Sichtflächen (22) eben ist.

7. Isolator (2) nach dem vorherigen Anspruch, **dadurch gekennzeichnet, dass** sich jede der Sichtflächen (22) in einer vertikalen Ebene befindet.

8. Isolator (2) nach einem der Ansprüche 3 bis 7, **dadurch gekennzeichnet, dass** mindestens einer der visuellen Informationsträger (24) ein Computerbildschirm ist, der durch eine Haltevorrichtung (30) außerhalb des Gehäuses (6) gegenüber der entsprechenden, als transparent bereitgestellten Sichtfläche (22) gehalten wird.

9. Isolator (2) nach einem der Ansprüche 3 bis 7, **dadurch gekennzeichnet, dass** mindestens einer der visuellen Informationsträger (24) einen Projektionsschirm umfasst, der sich auf der Höhe der entsprechenden Sichtfläche (22) befindet.

10. Isolator (2) nach einem der vorherigen Ansprüche, **dadurch gekennzeichnet, dass** die Vertiefung (20) an jeder der zwei Seitenwände (10, 11) bereitgestellt ist.

## Claims

1. An isolator (2), comprising an enclosure (6) which delimits an interior volume (V2) with a controlled atmosphere, the isolator having two front walls (8, 9) located opposite each other and connected to each other by two side walls (10, 11), a work station (16) being provided in each of the front walls, each work station comprising a transparent observation area (18) and two holes (12) connected in a sealed manner to handling gloves (14), each work station being configured to allow an operator, located outside the enclosure, to see the interior of the enclosure through the observation area while handling, with the aid of the handling gloves, objects located in the interior volume (V2),
**characterised in that** one of the side walls (11) has a recess (20) which projects from the remainder of this side wall (11) on the side of the interior volume (V2), the recess providing two viewing surfaces (22) which are each directed towards the observation areas (18) so that they are visible to the operators.

2. The isolator (2) according to the preceding claim, **characterised in that** the isolator comprises visual information carriers (24), which are respectively located at the viewing surfaces (22) and which are each visible to the operator when they look at the corresponding viewing surface (22) through the corresponding observation area (18).

3. The isolator (2) according to the preceding claim, **characterised in that** the visual information carriers (24) are controlled by a computer (28).

4. The isolator (2) according to any one of claims 2 or 3, **characterised in that** an axis connecting the two observation areas (18) to each other and an observation axis (A18) connecting one of the observation areas (18) to the corresponding visual information carrier (24) define an angular offset (α) between them, the angular offset being less than 45°, preferably less than 35°.

5. The isolator (2) according to the preceding claim, **characterised in that** for each visual information carrier (24), an axis orthogonal to the visual information carrier (24) defines, with the observation axis (A18) passing through the visual information carrier, an alignment angle (β) which is less than 30°, preferably less than 20°, more preferably less than 5°.

6. The isolator (2) according to any of the preceding claims, **characterised in that** each of the viewing surfaces (22) is flat.

7. The isolator (2) according to the preceding claim, **characterised in that** each of the viewing surfaces (22) is located in a vertical plane.

8. The isolator (2) according to any one of claims 3 to 7, **characterised in that** at least one of the visual information carriers (24) is a computer monitor, which is held opposite the corresponding viewing surface (22), which is provided as transparent, by a holding device (30) outside the enclosure (6).

9. The isolator (2) according to any one of claims 3 to 7, **characterised in that** at least one of the visual information carriers (24) comprises a projection screen, located at the corresponding viewing surface (22).

10. The insulator (2) according to any one of the preceding claims, **characterised in that** the recess (20) is provided on each of the two side walls (10, 11).
